(19) Europäisches Patentamt

European Patent Office

Office européen des brevets

(11) EP 1 319 857 A1

(12) DEMANDE DE BREVET EUROPEEN

(43) Date de publication:
18.06.2003 Bulletin 2003/25

(51) Int Cl.⁷: **F16D 48/06**

(21) Numéro de dépôt: 02293080.4

(22) Date de dépôt: **12.12.2002**

(84) Etats contractants désignés:
**AT BE BG CH CY CZ DE DK EE ES FI FR GB GR IE IT LI LU MC NL PT SE SI SK TR**
Etats d'extension désignés:
**AL LT LV MK RO**

(30) Priorité: **17.12.2001 FR 0116270**

(71) Demandeur: **Renault s.a.s.**
**92100 Boulogne Billancourt (FR)**

(72) Inventeurs:
• **Devaud, Emmanuel**
  **92140 Clamart (FR)**
• **Szymanski, Joel**
  **78340 Les Clayes Sous Bois (FR)**

(54) **Système de diagnostic de l'usure de l'embrayage d'un véhicule automobile**

(57) Un système de diagnostic d'usure d'un embrayage d'un véhicule comporte un disque d'embrayage, le disque d'embrayage comportant des garnitures et un ressort de garniture disposé entre les garnitures, le système comportant en outre des moyens de commande du serrage et du desserrage du disque d'embrayage et des moyens de détermination d'une courbe caractéristique (10, 11, 12) d'embrayage liant le couple transmissible à la position des moyens de commande.

Le système comporte en outre des moyens de diagnostic (2) qui déterminent qu'une opération de maintenance est nécessaire à partir de la courbe caractéristique (10, 11, 12) de l'embrayage.

Le système comporte de préférence des moyens de comparaison de critères (Akp, K) à des courbes d'usure reliant le critère au nombre de cycles d'embrayage effectués (N), pour déterminer un nombre de cycles d'embrayage restants (NR1, NR2) ainsi qu'une distance (D1, D2) avant une opération de maintenance.

Fig. 1

EP 1 319 857 A1

## Description

L'invention concerne un système de diagnostic de l'usure d'un embrayage d'un véhicule automobile.

Un embrayage pour véhicule automobile est généralement destiné à commander la transmission d'un couple issu du vilebrequin d'un moteur thermique vers les roues du véhicule par l'intermédiaire d'une boîte de vitesse. L'embrayage a une position débrayée dans laquelle aucun couple n'est transmis, et une position embrayée dans laquelle tout le couple fourni par le moteur est transmis vers la boîte de vitesses. De manière classique, le passage de la position embrayée à la position débrayée, appelé phase de débrayage, est commandée par le déplacement d'une butée d'embrayage dans une direction axiale par rapport au vilebrequin. Par le retour à sa position d'origine, la butée d'embrayage commande le passage de la position débrayée à la position embrayée, appelé phase d'embrayage. Cette phase d'embrayage est utilisée lors du changement de rapport de vitesses, pour équilibrer les vitesses de rotation du vilebrequin et d'un arbre d'entrée de la boîte de vitesses, par une augmentation progressive du couple transmis. Elle est également utilisée pour le démarrage du véhicule, pour mettre en mouvement le véhicule à partir d'une vitesse initiale nulle.

L'embrayage comporte un premier plateau fixé sur le vilebrequin et un disque d'embrayage monté coulissant sur l'arbre d'entrée et venant frotter contre le premier plateau par l'intermédiaire d'une première garniture. L'embrayage comporte en outre une cloche fixée sur le premier plateau et un deuxième plateau monté coulissant dans la cloche, le disque d'embrayage venant frotter sur le deuxième plateau par l'intermédiaire d'une deuxième garniture. La butée d'embrayage commande le coulissement du deuxième plateau pour, dans la position embrayée, serrer le disque d'embrayage entre les deux plateaux. Le mécanisme de commande du deuxième plateau est connu de manière classique et non détaillé ici.

Pour obtenir une transmission progressive du couple lors de la phase d'embrayage, les garnitures sont prévues dans certains cas avec une élasticité entre elles. Ainsi, le passage du début de frottement des disques jusqu'au couple maximal transmissible est obtenu sur une course plus importante du deuxième plateau. Pour cela, le disque d'embrayage comporte un ressort de progressivité interposé entre les garnitures et ayant une forme ondulée, vue dans une section cylindrique du ressort. Les garnitures sont fixées sur le ressort de progressivité sur le sommet des ondes par des rivets.

Les garnitures sont prévues pour s'user au cours de la vie de l'embrayage. Ainsi, la position de la butée d'embrayage pour laquelle un couple commence à être transmissible entre le moteur et la boîte de vitesses évolue au cours de la vie de l'embrayage. Cette position est appelée point de léchage. De plus, le ressort de progressivité est susceptible de s'écraser partiellement, diminuant ainsi la progressivité de la transmission de couple lors de la phase d'embrayage.

On connaît par le document US 5 181 593 un dispositif indicateur de l'usure d'un embrayage. La détection de l'usure est basée sur un contacteur disposé entre la butée d'embrayage et une fourchette commandant la butée. Le contacteur délivre un signal lorsque la fourchette est en contact avec la butée. Les garnitures sont considérées comme usées lorsque le contacteur délivre le signal en permanence, même lorsque la pédale de commande est relâchée. Ce dispositif ne permet pas de prévoir à quel moment l'usure sera atteinte. Il ne permet pas non plus de mettre en évidence la détérioration du ressort de progressivité.

On connaît également par le document WO 98/28162 un système de commande robotisée d'un embrayage. Lorsque le véhicule est en roue libre et que le moteur est au ralenti, l'embrayage est relâché jusqu'à ce que le moteur soit partiellement entraîné par la transmission. La mesure de la position du mécanisme d'actionnement est déterminée à ce moment pour en déduire le point de léchage. La position est enregistrée pour être utilisée ensuite dans les autres phases de commande.

L'indication d'usure d'embrayage du document US 5 181 593 est binaire et ne permet pas de prévoir à l'avance le moment où une opération de maintenance sera nécessaire. Par ailleurs, le système du document WO 98/28162 ne permet pas d'effectuer un diagnostic complet de l'usure de l'embrayage.

On connaît par la demande de brevet FR 01/10558 un dispositif d'assistance au démarrage en côte qui libère le frein de parking lorsque le dispositif a déterminé que le couple transmis aux roues est suffisant pour entraîner le véhicule en s'opposant à la pesanteur. Pour cela, le dispositif mémorise une courbe caractéristique de l'embrayage qui fournit un couple maximal transmissible en fonction de la position de la pédale d'embrayage.

Pendant les phases d'embrayage, le dispositif estime d'abord un couple transmis par le vilebrequin du moteur, en fonction d'une valeur de couple délivré par le moteur, du moment d'inertie du moteur et de la variation de vitesse de rotation du vilebrequin. La valeur du couple délivré est déterminée par le calculateur qui pilote le moteur. Elle est par exemple disponible sur un réseau numérique dans le véhicule. Cette opération est répétée plusieurs fois au cours de la phase d'embrayage pour différentes positions de la pédale d'embrayage, jusqu'à ce que les vitesses de rotation du vilebrequin et de l'arbre d'entrée soient égales. Un ensemble de points est ainsi déterminé pour définir la courbe caractéristique de l'embrayage. Cependant, aucun diagnostic de l'usure de l'embrayage n'est effectué à partir de cette courbe caractéristique.

C'est donc un objectif de l'invention de fournir un système de diagnostic de l'usure de l'embrayage d'un véhicule qui permette de surveiller à la fois l'usure des garnitures et du ressort de progressivité et de prédire le moment de maintenance de l'embrayage.

Avec cet objectif en vue, l'invention a pour objet un système de diagnostic d'usure d'un embrayage d'un véhicule, le système comportant un disque d'embrayage, le disque d'embrayage comportant des garnitures et un ressort de garniture disposé entre les garnitures, le système comportant en outre des moyens de commande du serrage et du desserrage du disque d'embrayage, caractérisé en ce qu'il comporte des moyens de détermination d'une courbe caractéristique d'embrayage liant un couple transmissible à la position des moyens de commande, la courbe caractéristique étant évaluée régulièrement, et des moyens de diagnostic qui déterminent des critères en fonction de la courbe caractéristique et qu'une opération de maintenance est nécessaire en fonction de l'évolution dans le temps des critères.

Les moyens de commande sont typiquement une pédale d'embrayage ou une butée d'embrayage lorsque le véhicule est équipé d'une boîte de vitesses manuelle ou un vérin lorsque l'embrayage est robotisé. Il est possible de mesurer la position des moyens de commande de diverses manières, mais les valeurs indiquées sont équivalentes.

Les moyens de détermination de la courbe caractéristique de l'embrayage sont similaires à ceux de la demande de brevet FR 01/10558 et décrits précédemment dans la présentation des techniques antérieures. La courbe est évaluée lors des cycles de débrayage et d'embrayage, par exemple à chaque cycle. Le système selon l'invention exploite la courbe caractéristique pour en déduire des critères sur l'usure de l'embrayage, en particulier sur l'état du ressort de progressivité, sur l'usure par frottement des garnitures et sur l'incrustation du ressort dans les garnitures.

Les moyens de diagnostic permettent d'informer l'utilisateur du véhicule par exemple par des voyants ou un afficheur au tableau de bord, ou de manière complémentaire, de rendre disponible une information consultable par des techniciens de maintenance sur le véhicule directement ou par un appareil de diagnostic relié au véhicule par liaison filaire ou par télétransmission.

Selon une caractéristique particulière, le système comporte des moyens de détermination du point de léchage à partir de la caractéristique de l'embrayage, les moyens de diagnostic déterminant la nécessité d'une opération de maintenance lorsque le point de léchage a franchi une limite prédéterminée.

Le point de léchage correspond à la position dans laquelle le disque d'embrayage commence à être serré, et est déterminé par exemple lorsque le couple transmissible a atteint un seuil prédéterminé, relativement faible. Dans ce cas, le point de léchage est caractérisé par une position des moyens de commande. Les moyens de détermination du point de léchage fournissent une position des moyens de commande qui est comparée à la limite prédéterminée. Cette limite est établie pour que le point de léchage la franchisse quand les garnitures sont considérées comme usées et nécessitent d'être changées.

Selon une autre caractéristique particulière, le système comporte des moyens de détermination de la raideur du ressort de progressivité, les moyens de diagnostic déterminant la nécessité d'une opération de maintenance lorsque la raideur du ressort est supérieure à un seuil prédéterminé.

Lorsque le ressort de progressivité s'écrase, sa raideur augmente et la phase d'embrayage devient plus délicate à commander, voire elle comporte des à-coups néfastes pour le confort des utilisateurs et pour la tenue mécanique des organes du véhicule. L'augmentation de la raideur au-delà du seuil prédéterminé doit donc déclencher une opération de maintenance pour changer le disque d'embrayage.

De préférence, la raideur du ressort est évaluée par les moyens de détermination de la raideur en calculant la pente de la courbe caractéristique en un point de calcul pris pour un couple transmissible supérieur à celui du point de léchage.

Une méthode d'évaluation préétablie de la raideur permet de comparer significativement la valeur calculée et le seuil. La raideur n'est pas évaluée directement, mais par l'intermédiaire d'une grandeur qui lui est proportionnelle.

Selon une première variante, le point de calcul est pris pour une valeur de couple transmissible prédéterminée.

Selon une deuxième variante, le point de calcul est pris pour une valeur prédéterminée de position des moyens de commande par rapport au point de léchage.

Selon un perfectionnement, le système comporte des moyens de comparaison de la position du point de léchage à une courbe d'usure prédéterminée représentant la position du point de léchage en fonction du nombre de cycles d'embrayage effectués, pour déterminer un premier nombre de cycles d'embrayage restants avant une opération de maintenance.

La courbe d'usure est déterminée de manière expérimentale, par exemple sur un banc d'essais, selon des cycles normalisés. Cette courbe trace l'évolution de la position du point de léchage en fonction du nombre de cycles d'embrayage subis, jusqu'au nombre maximal de cycles que l'embrayage, en particulier les garnitures, peut normalement subir. A partir de la position du point de léchage calculée à un instant donné, on détermine un point courant de la courbe d'usure. Le nombre de cycles d'embrayage restants est le nombre de cycles séparant le point courant du nombre maximal de cycles.

Selon un autre perfectionnement, le système comporte des moyens de comparaison de la raideur du ressort à une courbe d'usure prédéterminée du ressort représentant la raideur du ressort en fonction du nombre de cycles d'embrayage effectués, pour déterminer un deuxième nombre de cycles d'embrayage restants avant une opération de maintenance.

La courbe d'usure du ressort est également déterminée de manière expérimentale, par exemple sur un banc d'essais, selon des cycles normalisés. Cette courbe trace l'évolution de la raideur en fonction du nombre de cycles d'embrayage subis, jusqu'au nombre maximal de cycles que le ressort de progressivité peut normalement subir. A partir de la raideur calculée à un instant donné, on détermine un point courant de la courbe d'usure. Le nombre de cycles d'embrayage restants est le nombre de cycles séparant le point courant du nombre maximal de cycles.

De manière avantageuse, le système selon les perfectionnements précédents comporte des moyens de comptage du nombre de cycles d'embrayage moyen par unité de distance parcourue, pour en déduire, en fonction du premier ou du deuxième nombre de cycles d'embrayage restants, respectivement une première ou une deuxième distance restant à parcourir avant une opération de maintenance. Ainsi, le nombre de cycles d'embrayage restants est traduit de manière réaliste en nombre de kilomètres avant maintenance.

De préférence, le système comporte des moyens de détermination d'une distance finale restant à parcourir avant une opération de maintenance, la distance finale étant la plus petite parmi la première et la deuxième distance restant à parcourir.

On peut de manière équivalente, déterminer initialement un nombre restant final comme étant la valeur minimale du premier et du deuxième nombre restant, pour en déduire la distance finale.

L'invention sera mieux comprise et d'autres particularités et avantages apparaîtront à la lecture de la description qui va suivre, la description faisant référence aux dessins annexés parmi lesquels :

- la figure 1 est une vue schématique d'un réseau mettant en oeuvre le système selon l'invention ;

- la figure 2 est un diagramme de courbes caractéristiques d'embrayage, liant le couple transmissible à la position des moyens de commande, pour différents degrés d'usure de l'embrayage ;

- la figure 3 est un diagramme liant la position du point de léchage au nombre de cycles d'embrayage effectués ;

- la figure 4 est un diagramme liant la raideur au nombre de cycles d'embrayage effectués.

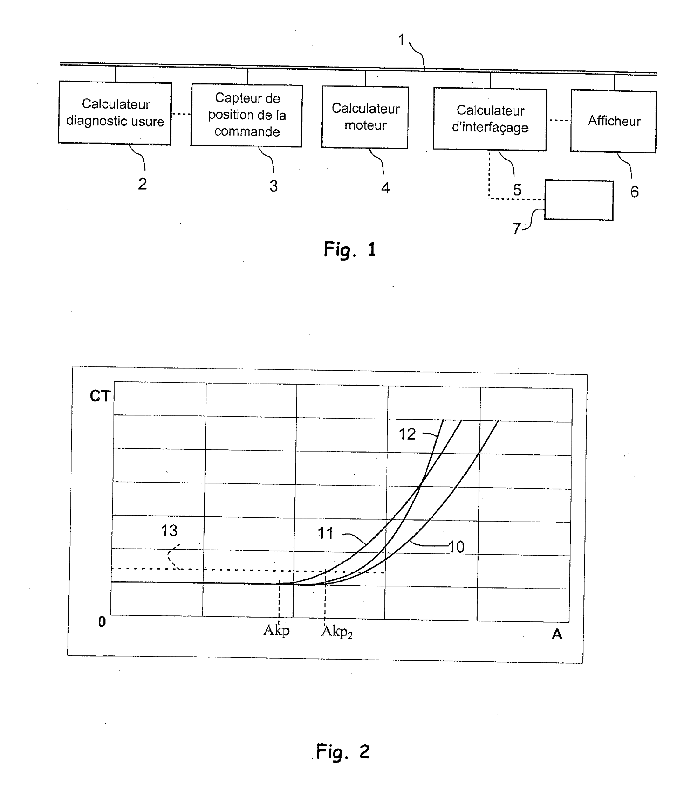

Un système de diagnostic selon l'invention est montré sur la figure 1 et est mis en oeuvre sur un véhicule comportant par exemple un réseau de multiplexage 1 qui transporte des informations entre différents modules. Parmi ces modules, on trouve un calculateur de diagnostic 2 de l'usure, un capteur de position 3 des moyens de commande qui délivre une information instantanée au réseau 1, un calculateur moteur 4 qui délivre au réseau 1 en particulier une information de couple moteur CM estimé et de vitesse du vilebrequin NV. Le réseau 1 est connecté également à un calculateur d'interface 5 qui détermine quelles informations doivent être transmises et de quelle manière, et à un afficheur 6 qui donne des informations à destination de l'utilisateur du véhicule.

Le calculateur d'interfaçage 5 délivre des messages directement à l'afficheur 6, au réseau 1 ou à une interface de transmission 7 vers l'extérieur, par exemple pour les opérations de maintenance ou de télédiagnostic.

Le capteur de position 3 mesure une position *A* absolue d'un élément lié aux moyens de commande de l'embrayage. Il mesure par exemple la position angulaire de la pédale d'embrayage ou la position linéaire de la butée d'embrayage. L'information délivrée par le capteur est transmise soit directement, soit par le réseau 1 au calculateur de diagnostic 2 d'usure.

De la même manière que dans la demande de brevet FR 01/10558, le calculateur de diagnostic 2 comporte un module d'estimation de la courbe caractéristique qui établit et mémorise la courbe caractéristique de l'embrayage, soit sous la forme d'un nuage de points, soit sous la forme d'un ensemble de paramètres liés à une formule mathématique. A titre d'exemple, la courbe caractéristique peut être modélisée sous la forme suivante :

$$CT = 0 \text{ si } A \le Akp$$

$$CT = C_0(A - Akp)^{d}0 \text{ si } A > Akp$$

Les paramètres $C_0, Akp, d_0$ suffisent à déterminer la courbe caractéristique. Le paramètre *Akp* représente la position de commande pour laquelle l'embrayage atteint le point de léchage.

La figure 2 montre différentes courbes caractéristiques d'embrayage selon différents degrés d'usure. Sur le diagramme, l'évolution de la position A de la gauche vers la droite correspond au passage de la position débrayée à la position embrayée. La première courbe caractéristique 11 est celle d'un embrayage neuf, qui est prise comme référence. La deuxième courbe caractéristique 10 est celle d'un embrayage dont les garnitures sont usées. Cette deuxième courbe 10 est semblable à la courbe 11, avec un décalage positif en abscisse. La course des moyens de commande pendant la phase d'embrayage pour atteindre le point de léchage est plus longue que dans le cas de l'embrayage neuf.

La troisième courbe caractéristique 12 est celle d'un embrayage dont le ressort de progressivité est devenu très raide. Le passage du point de léchage à la position de transmission du couple maximal est obtenu sur une course plus faible des moyens de commande que dans le cas d'un embrayage neuf. L'augmentation de raideur traduit par exemple un écrasement du ressort.

Le calculateur de diagnostic comporte également un module d'estimation des critères d'usure. Les critères d'usure sont la position du point de léchage *Akp* d'une part, et la raideur $\underline{K}$ du ressort de progressivité d'autre part.

La position du point de léchage peut être lue directement à partir de la modélisation de la courbe caractéristique, comme montré sur la figure 2 pour la première courbe 11. En variante, on peut déterminer la position $Akp_2$, montré également sur la figure 2 pour la première courbe 11, pour laquelle le couple transmissible est égal un couple prédéterminé très faible, par exemple 3 Nm, représenté par la ligne 13 sur le diagramme de la figure 2. Ceci permet de s'affranchir d'imprécisions sur la détermination du paramètre *Akp*.

Dans ce mode de réalisation, la raideur du ressort de progressivité est évaluée par le rapport $\underline{K}$ entre une variation de couple *Ct* transmis pour une variation de la position $\underline{A}$ des moyens de commande. Elle aurait pu être évaluée selon un autre mode de calcul équivalent. Elle est proportionnelle à la raideur d'écrasement du disque d'embrayage. Comme la pente de la courbe caractéristique n'est pas constante, on détermine un point de calcul pour lequel on évalue la pente de la courbe, et donc la raideur $\underline{K}$ du ressort de progressivité. Selon une première variante, le point de calcul est pris pour un couple de calcul C1 prédéterminé, par exemple à la moitié du couple maximal. Selon une autre variante, le point de calcul est pris pour une position des moyens de commande décalée d'une valeur prédéterminée par rapport au point de léchage.

Selon la méthode de stockage de la courbe caractéristique, la pente au point de calcul est calculée par une méthode algébrique ou par une méthode numérique. Dans le cas où la courbe serait mémorisée par une équation associée à des paramètres, la pente est donnée par l'équation de la dérivée de l'équation. Dans le cas d'une courbe stockée par un ensemble de points, la pente est donnée par une pondération des taux d'accroissement au voisinage du segment portant le point de calcul, selon des méthodes connues en soi.

Un module de traitement des critères reçoit en entrée les critères *Akp* et $\underline{K}$. Si la position du point de léchage est inférieure à un seuil prédéterminé Akps, alors les garnitures sont considérées comme usées et nécessitent une opération de maintenance. De même, si la raideur $\underline{K}$ dépasse un seuil prédéterminé *Ks*, le ressort de progressivité est considéré comme défectueux et nécessitant une opération de maintenance. Dans ces deux cas, le module de traitement délivre un signal sur le réseau à destination du calculateur d'interfaçage 5, qui informe l'utilisateur par l'intermédiaire de l'afficheur 6, et éventuellement par l'interface de communication 7.

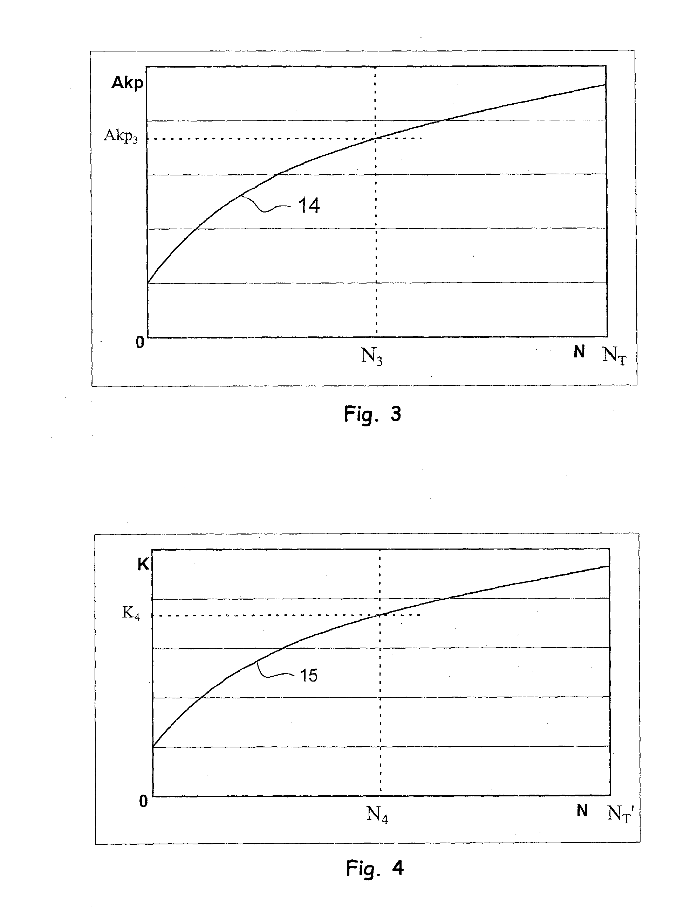

Selon un perfectionnement, les critères de diagnostic sont utilisés par un module de détermination de la distance restante pour déterminer une distance restant à parcourir avant entretien. Pour cela, le calculateur comporte deux courbes d'usure 14, 15, concernant respectivement la position du point de léchage *Akp* (comme montré sur la figure 3) et la raideur $\underline{K}$ du ressort de progressivité (comme montré sur la figure 4) en fonction du nombre de cycles $\underline{N}$ d'embrayage effectués. Ces courbes d'usure 14, 15 sont établies par des essais sur bancs selon des conditions normalisées et mémorisées dans le calculateur de diagnostic. Les courbes d'usure 14, 15 s'étendent de zéro à respectivement $N_T$ et $N_T{}'$ cycles.

Comme on le voit sur la figure 3, pour une position $Akp_3$ du point de léchage déterminée par le module d'estimation des critères d'usure, on détermine un nombre $N_3$ de cycles grâce à la courbe d'usure 14. On en déduit un premier nombre de cycles restants avant une opération de maintenance $NR_1 = N_T - N_3$. En se référant à la figure 4, pour une raideur $K_4$ diagnostiquée par le module d'estimation des critères d'usure, on détermine un nombre $N_4$ de cycles. On en déduit un premier nombre de cycles restants avant une opération de maintenance $NR_2 = N_T{}'-N_4$.

Le calculateur de diagnostic comporte des moyens de comptage du nombre de cycles d'embrayage moyen par kilomètre parcouru *Fkm* depuis le début de vie de l'embrayage. Il en déduit, à partir du premier $NR_1$ et du deuxième nombre de kilomètres restants $NR_2$ une première et une deuxième distance avant maintenance, selon les relations suivantes :

$$D_1 = \frac{NR_1}{Fkm}$$

et

$$D_2 = \frac{NR_2}{Fkm}$$

Le calculateur de diagnostic donne alors une information de distance finale $\underline{D}$ avant maintenance sur le réseau 1, la distance $\underline{D}$ ayant la valeur minimale entre $D_1$ et $D_2$.

L'invention n'est pas limitée au mode de réalisation qui vient d'être décrit. Les fonctions de traitement des informations pourront être réparties différemment. De plus, la présence d'un réseau n'est pas indispensable, les échanges entre le module de diagnostic et les autres modules pouvant être directs.

**Revendications**

1. Système de diagnostic d'usure d'un embrayage d'un véhicule, le système comportant un disque d'embrayage, le disque d'embrayage comportant des garnitures et un ressort de progressivité disposé entre les garnitures, le système comportant en outre des moyens de commande du serrage et du desserrage du disque d'embrayage, **caractérisé en ce qu'**il comporte des moyens de détermination d'une courbe caractéristique (10, 11, 12) d'embrayage liant un couple transmissible (Ct) à la position des moyens de commande, la courbe caractéristique étant évaluée régulièrement, et des moyens de diagnostic (2) qui déterminent des critères (Akp, K) en fonction de la courbe caractéristique et qu'une opération de maintenance est nécessaire en fonction de l'évolution dans le temps des critères.

2. Système selon la revendication 1, **caractérisé en ce qu'**il comporte des moyens de détermination de la position d'un point de léchage (Akp) à partir de la courbe caractéristique (10, 11, 12) de l'embrayage, les moyens de diagnostic déterminant la nécessité d'une opération de maintenance lorsque la position du point de léchage (Akp) a franchi une limite prédéterminée (Akps).

3. Système selon la revendication 1, **caractérisé en ce qu'**il comporte des moyens de détermination de la raideur (K) du ressort de progressivité, les moyens de diagnostic déterminant la nécessité d'une opération de maintenance lorsque la raideur (K) du ressort est supérieure à un seuil prédéterminé (Ks).

4. Système selon les revendications 2 et 3 prises en combinaison, **caractérisé en ce que** la raideur (K) du ressort est évaluée par les moyens de détermination de la raideur en calculant la pente de la courbe caractéristique en un point de calcul pris pour un couple transmissible supérieur à celui du point de léchage.

5. Système selon la revendication 4, **caractérisé en ce que** le point de calcul est pris pour une valeur de couple transmissible prédéterminée (C1).

6. Système selon la revendication 4, **caractérisé en ce que** le point de calcul est pris pour une valeur prédéterminée de position des moyens de commande par rapport au point de léchage.

7. Système selon la revendication 2, **caractérisé en ce qu'**il comporte des moyens de comparaison de la position du point de léchage (Akp) à une courbe d'usure (14) prédéterminée représentant la position du point de léchage en fonction du nombre de cycles d'embrayage effectués (N), pour déterminer un premier nombre de cycles d'embrayage restants (NR1) avant une opération de maintenance.

8. Système selon la revendication 3, **caractérisé en ce qu'**il comporte des moyens de comparaison de la raideur (K) du ressort à une courbe d'usure (15) prédéterminée représentant la raideur du ressort en fonction du nombre de cycles d'embrayage effectués (N), pour déterminer un deuxième nombre de cycles d'embrayage restants (NR2) avant une opération de maintenance.

9. Système selon les revendications 7 ou 8, **caractérisé en ce qu'**il comporte des moyens de comptage du nombre de cycles d'embrayage moyen par unité de distance parcourue (Fkm), pour en déduire, en fonction du premier (NR1) ou du deuxième nombre de cycles d'embrayage restants (NR2), respectivement une première (D1) ou une deuxième distance (D2) restant à parcourir avant une opération de maintenance.

10. Système selon la revendication 9, **caractérisé en ce qu'**il comporte des moyens de détermination d'une distance finale (D) restant à parcourir avant une opération de maintenance, la distance finale (D) étant la plus petite parmi la première (D1) et la deuxième distance (D2) restant à parcourir.

1

| Calculateur diagnostic usure | Capteur de position de la commande | Calculateur moteur | Calculateur d'interfaçage | Afficheur |

2 3 4 5 6

7

**Fig. 1**

CT

12

13 11

10

0

Akp    Akp$_2$    A

**Fig. 2**

Fig. 3

Fig. 4

**Office européen des brevets**

**RAPPORT DE RECHERCHE EUROPEENNE**

Numéro de la demande

EP 02 29 3080

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 277 049 A (VALEO) 3 août 1988 (1988-08-03) * le document en entier * | 1 | F16D48/06 |
| Y | PATENT ABSTRACTS OF JAPAN vol. 008, no. 090 (M-292), 25 avril 1984 (1984-04-25) & JP 59 006432 A (DIESEL KIKI KK), 13 janvier 1984 (1984-01-13) * abrégé * | 1,2 | |
| Y | US 6 086 514 A (MARTIN PAUL GRAHAME ET AL) 11 juillet 2000 (2000-07-11) * colonne 1, ligne 30 - ligne 35 * * colonne 3, ligne 28 - ligne 32 * * figures 1,4 * | 1,2 | |
| A | PATENT ABSTRACTS OF JAPAN vol. 1997, no. 08, 29 août 1997 (1997-08-29) & JP 09 089502 A (NISSAN DIESEL MOTOR CO LTD), 4 avril 1997 (1997-04-04) * abrégé * | 1,3 | |

DOMAINES TECHNIQUES RECHERCHES (Int.Cl.7)

F16D

Le présent rapport a été établi pour toutes les revendications

| Lieu de la recherche | Date d'achèvement de la recherche | Examinateur |
|---|---|---|
| LA HAYE | 25 mars 2003 | Clasen, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 3080

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-03-2003

| Document brevet cité au rapport de recherche | | Date de publication | Membre(s) de la famille de brevet(s) | | Date de publication |
|---|---|---|---|---|---|
| EP 0277049 | A | 03-08-1988 | FR | 2609562 A1 | 15-07-1988 |
| | | | DE | 3860015 D1 | 01-02-1990 |
| | | | EP | 0277049 A1 | 03-08-1988 |
| | | | JP | 63253900 A | 20-10-1988 |
| | | | US | 4829221 A | 09-05-1989 |
| JP 59006432 | A | 13-01-1984 | JP | 1486466 C | 14-03-1989 |
| | | | JP | 63035851 B | 18-07-1988 |
| US 6086514 | A | 11-07-2000 | AU | 5329898 A | 17-07-1998 |
| | | | DE | 69711170 D1 | 25-04-2002 |
| | | | DE | 69711170 T2 | 14-11-2002 |
| | | | EP | 0883509 A1 | 16-12-1998 |
| | | | WO | 9828162 A1 | 02-07-1998 |
| | | | GB | 2324584 A ,B | 28-10-1998 |
| | | | JP | 2001501289 T | 30-01-2001 |
| JP 09089502 | A | 04-04-1997 | AUCUN | | |

EPO FORM P0460

Pour tout renseignement concernant cette annexe : voir Journal Officiel de l'Office européen des brevets, No.12/82